# EUROPÄISCHE PATENTSCHRIFT

(11) **EP 2 801 410 B1**
(45) Veröffentlichungstag und Bekanntmachung des Hinweises auf die Patenterteilung: **10.10.2018**
(21) Anmeldenummer: 14401051.9
(22) Anmeldetag: 05.05.2014
(51) Int. Cl.: B05B 1/16, B05B 1/30, F16K 31/524, F16K 11/16, B05B 1/20

(54) **Mehrfachdüsenkörper**
Multiple nozzle body
Corps à buses multiples

(30) Priorität: 07.05.2013 DE 102013104674
(43) Veröffentlichungstag der Anmeldung: 12.11.2014
(73) Patentinhaber: Amazonen-Werke H. Dreyer GmbH & Co. KG, 49205 Hasbergen (DE)
(72) Erfinder: Austermann, Stefan, 48291 Telgte (DE)

(56) Entgegenhaltungen:
- DE-A1-102010 036 437
- US-A- 4 570 663
- US-A- 5 407 173
- US-A1- 2003 150 495

## Beschreibung

Die Erfindung betrifft einen Mehrfachdüsenkörper gemäß des Oberbegriffes des Patentanspruches 1.

Eine derartige Flüssigkeitsleitung mit zugeordnetem Düsenkörper ist in der DE 10 2010 036 437 A1 beschrieben. Hier zweigt von der Flüssigkeitsleitung in einem Abzweigungsbereich eine Zweigleitung zu der zumindest einen Ausbringdüse des Düsenkörpers ab. Der Abzweigleitung ist zumindest ein Absperrelement aufweisendes Absperrventil zugeordnet. Das Absperrelement ist jeweils kugelartig ausgebildet und wird jeweils mittels einer Druckfeder in seinen Ventilsitz gedrückt. Hierbei umfasst das Federende der Druckfeder das kugelartige Absperrelement. Durch dieses feste Umgreifen des kugelartigen Absperrelementes wird das Herausrollen oder Herausschieben des kugelartigen Absperrelementes aus dem Ventilsitz und die Rückbewegung in den Ventilsitz erschwert und erfordert relativ hohe Stellkräfte.

Der Erfindung liegt die Aufgabe zugrunde, eine Verringerung der Stellkräfte zur Verlagerung des kugelartigen Absperrelementes aus dem Ventilsitz sowie eine Erleichterung der Rückbewegung des kugelartigen Absperrelementes in den Ventilsitz zu erreichen.

Diese Aufgabe wird erfindungsgemäß durch die kennzeichnenden Merkmale des Anspruches 1 gelöst.

Infolge dieser Maßnahme wird durch das zwischen der Druckfeder und der Kugel angeordnete Zwischenstück wie Voraussetzung dafür geschaffen, dass das Zwischenstück zwar noch von der Kugel geführt wird, als aber erst quasi nur noch eine Punktberührung oder eine geringe Berührungsfläche zwischen dem federbelasteten Zwischenstück und der Ventilkugel gibt. Somit kann die Ventilkugel in geführter Weise gezielt verrollen. Durch diese Ausgestaltung wird erreicht, dass die Kugel sich gegenüber dem Zwischenstück unter dem Ventilsitz besser abwälzen kann. Außerdem wird das zurückholen der Ventilkugel in den Ventilsitz wesentlich erleichtert bzw. unterstützt. Es erfolgt ein schnelleres verschließen der Abgangsöffnung durch die Kugel gegenüber dem Ventilsitz. Die Kugel rollt quasi in den Ventilsitz wieder zurück.

Um in einfacher Weise das sichere Fixieren des Zwischenstückes auf der Kugel zu erreichen, ist vorgesehen, dass die an der Kugel anliegende Fläche des Zwischenstückes die Ventilkugel zumindest teilweise umgreifend und/oder formschlüssig ein- und erfassend ausgebildet ist. Somit wird einerseits ein ausreichendes Umgreifen der Ventilkugeln durch die Zwischenstücke und anderseits eine ausreichend Bewegungsfreiheit zwischen dem Zwischenstück und der zugeordneten Ventilkugel sichergestellt.

Die US 5407173 zeigt ein Ventil zur Steuerung der Gasströmung für einen Gasbrenner. Hierbei ist ein über ein Handrad zu betätigender Ventilschaft mit einer Kugelventileinheit zum Ein- und Ausrücken einer Ventilkugel in Bezug auf einen Ventilsitz beschrieben. Der Ventilschaft weist an seinem Ende eine Bohrung auf, in welcher die Kugel der Ventileinheit vollständig umfasst und unverrückbar gegenüber dem Ventilschaft angeordnet ist.

Weitere Einzelheiten der Erfindung sind der Beispielsbeschreibung und den Zeichnungen zu entnehmen. Die Zeichnungen zeigen
- Fig. 1: den Mehrfachdüsenkörper in perspektivischer Ansicht,
- Fig. 2: den Mehrfachdüsenkörper in der Seitenansicht,
- Fig. 3: den Mehrfachdüsenkörper im Bereich der Flüssigkeitsleitung in der Ansicht III - III,
- Fig. 4: den Mehrfachdüsenkörper im Bereich der Flüssigkeitsleitung und im Abzweigbereich der Abzweigleitung in der Ansicht IV - IV,
- Fig. 5: den Mehrfachdüsenkörper in der Vorderansicht,
- Fig. 6: den Mehrfachdüsenkörper in der Ansicht VI - VI,
- Fig. 7: den Mehrfachdüsenkörper in der Seitenansicht,
- Fig. 8: den Mehrfachdüsenkörper in der Ansicht VIII - VIII,
- Fig. 9: den Mehrfachdüsenkörper in der Ansicht IX - IX,
- Fig. 10: den Mehrfachdüsenkörper in der Ansicht X - X mit einer anderen Schaltstellung der Betätigungsscheibe,
- Fig. 11: die Zuordnung der Druckfedern mit den Zwischenstücken zu den Ventilkugeln mit dem schaltbaren Betätigungselement in perspektivischer Darstellung,
- Fig. 12: die Zuordnung der Druckfedern mit den Zwischenstücken zu den Ventilkugeln mit dem schaltbaren Betätigungselement in Explosionsdarstellung und
- Fig. 13: die Zuordnung der Druckfedern mit den Zwischenstücken zu den Ventilkugeln im Schnitt XIII - XIII.

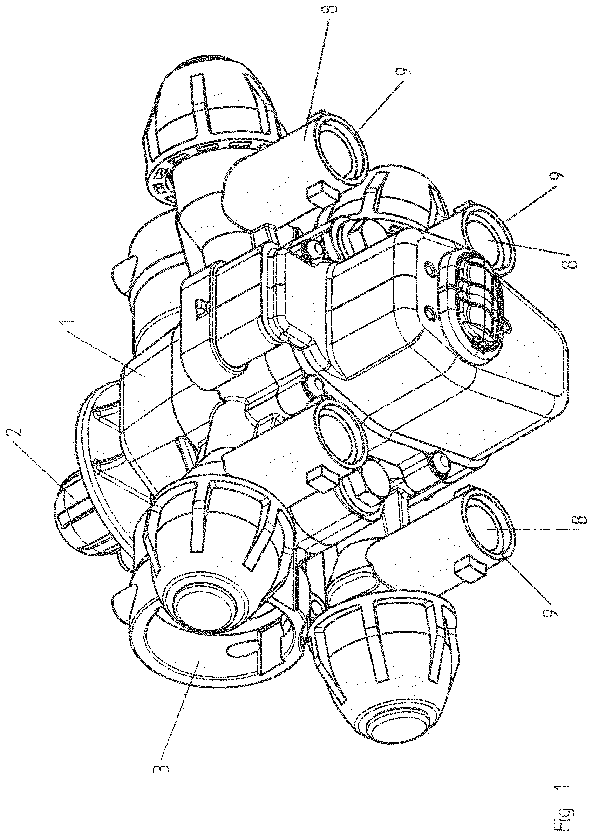

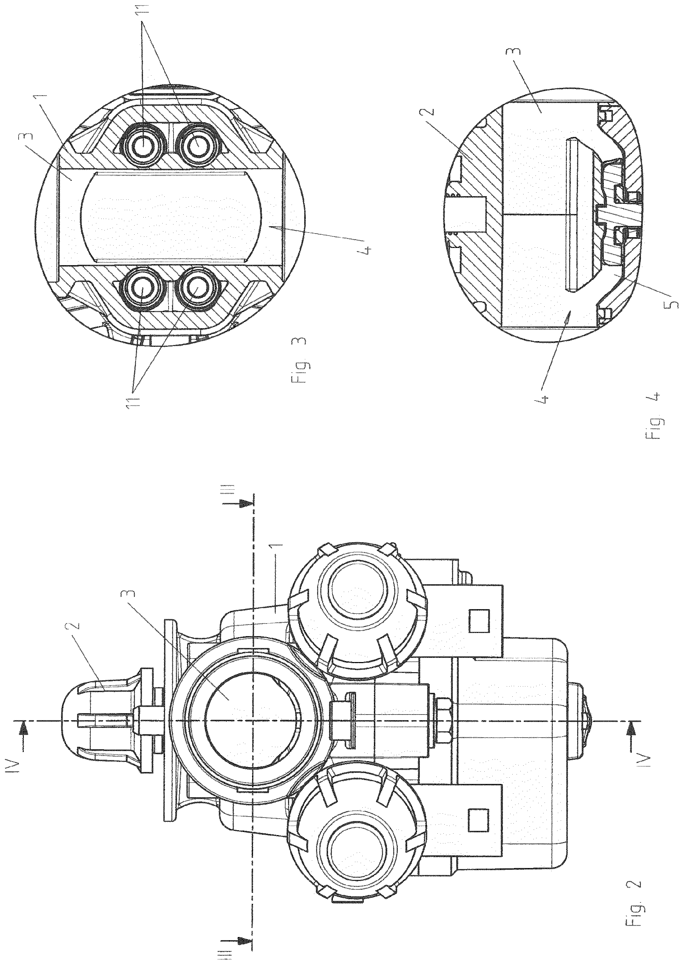

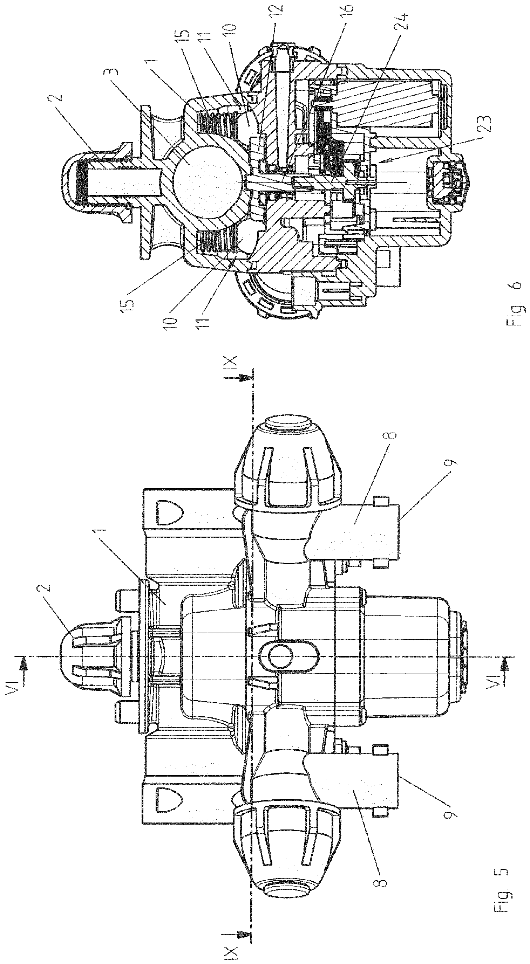

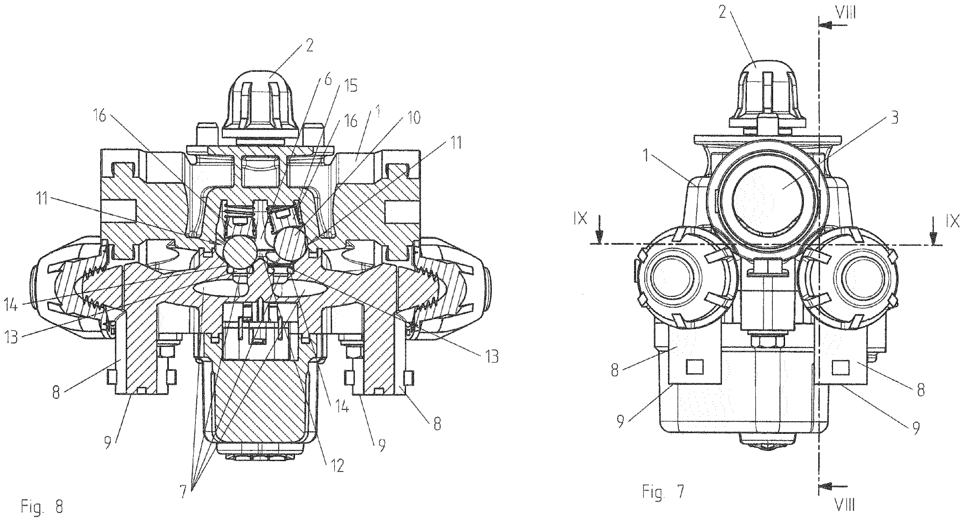

Der Mehrfachdüsenkörper gemäß den Fig. 1 bis 10 weist das Gehäuse 1 auf. An dem Gehäuse ist das Befestigungsmittel 2 angeordnet, mit welchem der Mehrfachdüsenkörper an Rahmenelementen, Verteilergestänge, etc. befestigt werden kann. Im oberen Bereich des Gehäuses 1 des Mehrfachdüsenkörpers ist ein Teil 3 der Flüssigkeitsleitung, an welcher der Mehrfachdüsenkörper anschließbar ist, angeordnet. Über diese Flüssigkeitsleitung, die beispielsweise an einem Verteilergestänge einer landwirtschaftlichen Feldspritze angeordnet ist, ist dem jeweiligen Mehrfachdüsenkörper die auszubringende Flüssigkeit zuzuführen. Die Flüssigkeitsleitung 3 ist mit der in dem Gehäuse 1 in einem Abzweigbereich 4 angeordneten Abzweigleitung 5 verbunden. Die Abzweigleitung 5 mündet in dem in dem Gehäuse 1 angeordneten Verteilerraum 6 aus. Von diesem Verteilerraum 6 führen, gemäß des Ausführungsbeispiels, vier Verbindungsleitungen 7, die die Verlängerung der Abzweigleitung 5 bilden, zu in dem Gehäuse 1 angeordneten Ausbringleitungen 8, an deren Enden 9 in nicht dargestellter Weise mittels Überwurfmuttern Ausbringdüsen in bekannter Weise angeordnet sind.

Die Verbindungsleitungen 7 sind im Bereich des Verteilerraumes 6 mittels als Absperrelemente 10 aufweisende Absperrventile 11 abzusperren. Über diese Absperrelemente 10 sind die Verbindungsleitungen 7 mit der Zuleitung 5 wahlweise verbindbar und/oder ihr gegenüber absperrbar. Die Absperrelemente 10 sind über schaltbare Betätigungselemente 12 betätigbar und somit in die jeweilige Absperr- oder Durchflussposition zu bringen.

Die Absperrventile 11 weisen jeweils einen in dem Gehäuse 1 angeordneten Ventilsitz 13, dem jeweils ein als Dichtring 14 ausgebildeter Ringabschnitt zugeordnet ist, auf. Die Absperrelemente 10 sind kugelartig, im Ausführungsbeispiel als Kugeln ausgebildet. Wenn die Ventilkugeln 10 sich im Ventilsitz 13 befinden, wirken sie in dieser Absperrstellung mit dem Dichtring 14 des Ventilsitzes 13 abdichtend zusammen. Den Kugeln 10 sind Druckfedern 15 zugeordnet, mittels welchem sie in Richtung des Ventilsitzes 13 gedrückt werden.

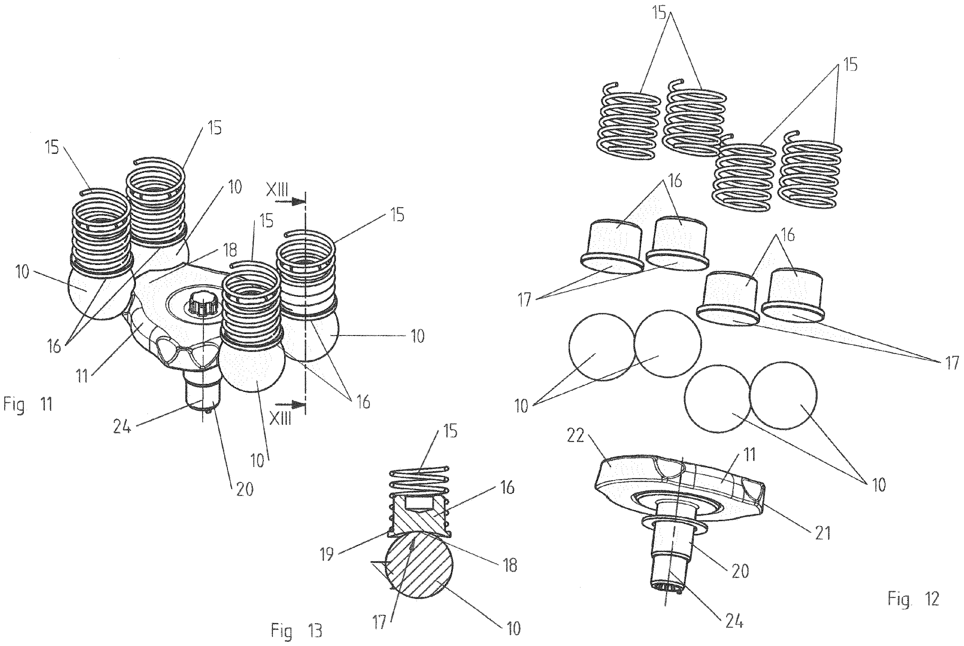

Zwischen der jeweiligen Druckfeder 15 und der jeweiligen Kugel 10 ist ein Zwischenstück 16 angeordnet, wie insbesondere den Fig. 12 und 13 zu entnehmen ist. Die an der Ventilkugel 10 anliegende Fläche 17 des Zwischenstückes 16 ist im inneren Bereich 18 vertieft gegenüber dem äußeren Umfangsbereich 19 ausgebildet ist, wie der Fig. 13 besonders gut zu entnehmen ist. Hierdurch ist die an der Kugel 10 anliegende Fläche 17 des Zwischenstückes 16 die Ventilkugel 10 zumindest teilweise umgreifend und/oder formschlüssig ein- und erfassend ausgebildet. Um dieses zu erreichen ist im Ausführungsbeispiel die an der Ventilkugel 10 anliegende Fläche 17 des Zwischenstückes 16 konkav ausgebildet ist.

Die an der Ventilkugel 10 anliegende Fläche 17 des Zwischenstückes 16 weist eine einem Kugelabschnitt ähnliche Ausgestaltung auf und der Radius der an der Ventilkugel 10 anliegenden konkaven Fläche 17 des Zwischenstückes 16 ist mindestens das 1,5-fache, vorzugsweise das 2 bis 5-fache größer als der Radius der Ventilkugeln 16.

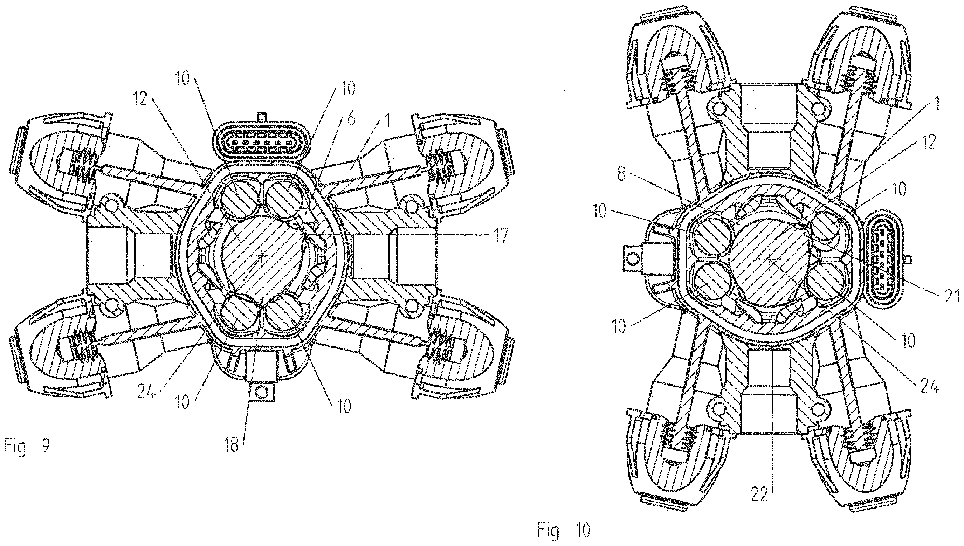

Das schaltbare Betätigungselement 12 ist scheibenartig ausgebildet und drehfest mit einer in dem Gehäuse 1 gelagerten Schaltwelle 20 verbunden. Das Betätigungselement 12 weist mehrere Schaltnocken 21, 22, wie die Fig. 9 und 10 zeigen, auf. Gemäß des Ausführungsbeispiels weist das Betätigungselement 12 zwei Schaltnocken 21, 22 auf. Die Schaltwelle 20 des Betätigungselementes 12 ist mit einem motorischen Stellelement 23, welches als Elektromotor ausgebildet ist, drehfest verbunden und somit über das motorische Stellelement um seine Drehachse verdrehbar.

Einer der beiden Schaltnocken 21 ist so ausgestaltet, dass er nur ein als Kugel 10 ausgebildetes Ventilelement aus dem Ventilsitz 13 drücken kann, so dass der Durchfluss zu einer Verbindungsleitung 7 frei gegeben ist. Der andere der beiden Schaltnocken 22 ist so ausgestaltet, dass er zwei nebeneinander angeordnete als Kugeln 10 ausgebildete Absperrelemente gleichzeitig in eine den Durchfluss in die jeweiligen Verbindungsleitungen 7 freigebenden Stellung bewegen kann, das heißt, dass er gleichzeitig zwei als Kugeln 10 ausgebildete Ventilelemente aus ihren Ventilsitzen 13 drücken kann.

Das Betätigungselement 12 mit den beiden Schaltnocken 21, 22 ist in unterschiedliche Positionen verdrehbar, wie dies für einige mögliche Positionen in den Fig. 9 und 10 dargestellt ist. Wie hieraus ersichtlich ist, werden je nach Schaltstellung des Betätigungselementes 12 der Durchfluss für keine, eine oder mehrere Verbindungsleitungen 7 zu den Ausbringdüsen führenden Ausbringleitungen 8 freigegeben. Somit können wahlweise keiner, einer oder mehrerer Verbindungsleitungen 7 und somit Ausbringdüsen in unterschiedlicher Kombination die auszubringende Flüssigkeit zugeleitet werden.

Die Schaltnocken 21, 22 des scheibenartigen Betätigungselementes 12 wirken mit einer zu der Drehachse 24 des Betätigungselementes 12 etwa senkrechten Richtung etwa auf Höhe der Mitte der Kugeln 10 der Absperrventile 9 auf die Kugeln 10 ein und drücken in diese in der zu der Drehachse 24 senkrechten Richtung über die als Dichtringe 15 ausgebildeten Ringsabschnitte des jeweiligen Ventilsitzes 13 aus dem Ventilsitz 13 in eine den Durchfluss zu der jeweiligen Verbindungsleitung 7 freigebenden Stellung.

Das jeweilige motorische Einstellelement 23, welches als Elektromotor ausgebildet ist, ist über nicht dargestellte Verbindungsleitungen mit einer Stromversorgung und einer Steuerungseinrichtung, welche beispielsweise als Bordcomputer ausgebildet sein kann, verbunden.

## Patentansprüche

1. Mehrfachdüsenkörper mit mehreren Ausbringdüsen zur Anordnung an der Flüssigkeitsleitung (3) einer landwirtschaftlichen Feldspritze, wobei die Flüssigkeitsleitung (3) mit der Zuleitung des Mehrfachdüsenkörpers verbindbar ist, wobei die Zuleitung in einem Verteilerraum (6) ausmündet, wobei von dem Verteilerraum (6) mehrere jeweils zu einer Ausbringdüse führende Verbindungsleitungen (7) abzweigen, wobei in dem Verteilerraum (6) jeweils einer Verbindungsleitung (7) zugeordnetes als Absperrventil ausgebildetes Absperrelement zugeordnet ist, wobei mittels der über ein schaltbares Betätigungselement betätigbare Absperrelemente (10) der Absperrventile (11) ein oder mehrere Verbindungsleitungen (7) mit der Zuleitung wahlweise verbindbar und/oder ihr gegenüber absperrbar sind, wobei das Betätigungselement (12) mehrere Schaltnocken aufweist und um eine Drehachse in unterschiedliche Schaltstellungen drehbar ist, wobei die Absperrelemente (10) kugelartig ausgebildet und in ihrer Absperrstellung abdichtend in einem einen Ringabschnitt aufweisenden Ventilsitz angeordnet sind, wobei die kugelartigen Absperrelemente (10) in zumindest annähernd senkrechter Richtung zur Drehachse des Betätigungselementes (12) über die schrägen Wände des Ringabschnittes des Ventilsitzes aus dem Ventilsitz in eine den Durchfluss zu der jeweiligen Verbindungsleitung (7) frei gebende Stellung bewegbar sind, wobei die kugelartigen Ventilelemente (10) als Kugeln ausgebildet sind und mittels Druckfedern (15) in ihren Ventilsitz in Abdichtstellung drückbar sind, **dadurch gekennzeichnet, dass** zwischen der jeweiligen Druckfeder (15) und der jeweiligen Kugel (10) ein Zwischenstück (16) angeordnet ist, dass die an der Ventilkugel (10) anliegende Fläche (17) des Zwischenstückes (16) im inneren Bereich (18) in konkaver Weise vertieft gegenüber dem äußeren Umfangsbereich (19) ausgebildet ist und dass die an der Ventilkugel (10) anliegende Fläche (17) des Zwischenstückes (16) eine einem Kugelabschnitt ähnliche Ausgestaltung aufweist und der Radius der an der Ventilkugel (10) anliegenden konkaven Fläche (17) des Zwischenstückes (16) mindestens das 1,5-fache, vorzugsweise das 2 bis 5-fache größer als der Radius der Ventilkugeln (10) ist.

2. Mehrfachdüsenkörper nach Anspruch 1, **dadurch gekennzeichnet, dass** die an der Kugel (10) anliegende Fläche (17) des Zwischenstückes (16) die Ventilkugel (10) zumindest teilweise umgreifend und/oder formschlüssig ein- und erfassend ausgebildet ist.

## Claims

1. Multiple nozzle body with a plurality of discharge nozzles for arrangement on the liquid line (3) of an agricultural field sprayer, wherein the liquid line (3) is connectable to the feed line of the multiple nozzle body, wherein the feed line opens out in a distributing chamber (6), wherein a plurality of connecting lines (7) each leading to a discharge nozzle branch off from the distributing chamber (6), wherein a shut-off element which is assigned to a connecting line (7) and is designed as a shut-off valve is in each case assigned in the distributing chamber (6), wherein one or more connecting lines (7) are optionally connectable to the feed line and/or can be shut off in relation thereto by means of the shut-off elements (10) of the shut-off valves (11), said shut-off elements being actuable via a switchable actuating element, wherein the actuating element (12) has a plurality of switching cams and is rotatable into different switching positions about an axis of rotation, wherein the shut-off elements (10) are of spherical design and, in their shut-off position, are arranged in a sealing manner in a valve seat having an annular portion, wherein the spherical shut-off elements (10) are moveable in an at least approximately perpendicular direction to the axis of rotation of the actuating element (12) from the valve seat over the oblique walls of the annular portion of the valve seat into a position releasing the throughflow to the respective connecting line (7), wherein the spherical valve elements (10) are designed as balls and can be pressed into their valve seat in the sealing position by means of compression springs (15), **characterized in that** an intermediate piece (16) is arranged between the respective compression spring (15) and the respective ball (10), **in that** that surface (17) of the intermediate piece (16) which lies against the valve ball (10) is designed in the inner region (18) so as to be recessed concavely in relation to the outer circumferential region (19), and **in that** that surface (17) of the intermediate piece (16) which lies against the valve ball (10) has a configuration similar to a spherical portion and the radius of the concave surface (17) of the intermediate piece (16) that lies against the valve ball (10) is at least 1.5 times, preferably 2 to 5 times larger than the radius of the valve balls (10) .

2. Multiple nozzle body according to Claim 1, **characterized in that** that surface (17) of the intermediate piece (16) which lies against the ball (10) is formed in a manner at least partially engaging around the valve ball (10) and/or enclosing and holding same in a form-fitting manner.

## Revendications

1. Tête de buse multiple avec plusieurs buses de sortie à agencer sur la conduite de liquide (3) d'un pulvérisateur agricole, dans laquelle la conduite de liquide (3) peut être raccordée à la conduite d'alimentation de la tête de buse multiple, dans laquelle la conduite d'alimentation débouche dans une chambre de distributeur (6), dans laquelle plusieurs conduites de liaison (7) conduisant respectivement à une buse de sortie partent de la chambre de distributeur (6), dans laquelle un élément d'arrêt formé par une vanne d'arrêt associée respectivement à une conduite de liaison (7) est associée dans la chambre de distributeur (6), dans laquelle une ou plusieurs conduite(s) de liaison (7) peut/peuvent être au choix raccordée(s) à la conduite d'alimentation et/ou fermée(s) par rapport à celle-ci au moyen des éléments d'arrêt (10) des vannes d'arrêt (11) actionnable par un élément d'actionnement commutable, dans laquelle l'élément d'actionnement (12) présente plusieurs cames de commutation et peut tourner autour d'un axe de rotation dans différentes positions de commutation, dans laquelle les éléments d'arrêt (10) sont de forme sphérique et sont disposés dans leur position d'arrêt de façon étanche dans un siège de vanne présentant une partie annulaire, dans laquelle les éléments d'arrêt sphériques (10) sont déplaçables dans une direction au moins approximativement perpendiculaire à l'axe de rotation de l'élément d'actionnement (12) sur les parois inclinées de la partie annulaire du siège de vanne à partir du siège de vanne jusqu'à une position libérant le débit vers la conduite de liaison respective (7), dans laquelle les éléments de vanne sphériques (10) sont réalisés sous forme de billes et peuvent être pressés en position d'étanchéité dans leur siège de vanne au moyen de ressorts de pression (15), **caractérisée en ce qu'**une pièce intermédiaire (16) est disposée entre le ressort de pression (15) respectif et la sphère (10) respective, **en ce que** la surface (17) de la pièce intermédiaire (16) qui repose contre la sphère de vanne (10), dans la zone intérieure (18) est réalisée évidée de manière concave par rapport à la zone circonférentielle (19) extérieure et **en ce que** la surface (17) de la pièce intermédiaire (16) qui repose contre la sphère de vanne (10) possède une configuration similaire à une portion de sphère et le rayon de la surface (17) concave de la pièce intermédiaire (16) qui repose contre la sphère de vanne (10) est au moins 1,5 fois, de préférence de 2 à 5 fois plus grand que le rayon des sphères de vanne (10).

2. Tête de buse multiple selon la revendication 1, **caractérisée en ce que** la surface (17) de la pièce intermédiaire (16) qui repose contre la sphère (10) est configurée pour envelopper et/ou enchâsser et saisir par complémentarité de formes au moins partiellement la sphère de vanne (10).
